# EUROPÄISCHE PATENTSCHRIFT

(11) **EP 3 502 186 B1**
(45) Veröffentlichungstag und Bekanntmachung des Hinweises auf die Patenterteilung: **20.05.2020**
(21) Anmeldenummer: 17209962.4
(22) Anmeldetag: 22.12.2017
(51) Int. Cl.: C08L 77/06

(54) **WEICHGEMACHTE UND FLAMMGESCHÜTZTE POLYAMIDFORMMASSE UND VERWENDUNGEN DAFÜR**
PLASTICIZED AND FLAME-RETARDANT POLYAMIDE MOULDING MATERIAL AND USES THEREOF
MASSE DE FORMAGE EN POLYAMIDE SOUPLE ET IGNIFUGE ET SES UTILISATIONS

(43) Veröffentlichungstag der Anmeldung: 26.06.2019
(73) Patentinhaber: EMS-Patent AG, 7013 Domat/Ems (CH)
(72) Erfinder: STÖPPELMANN, Georg, 7402 Bonaduz (CH)
(74) Vertreter: Bremi, Tobias Hans

(56) Entgegenhaltungen:
- WO-A1-2011/000457
- US-A1- 2014 065 338
- US-A1- 2017 037 198

## Beschreibung

### TECHNISCHES GEBIET

Die vorliegende Erfindung betrifft eine weichgemachte, flammgeschützte thermoplastische Polyamidformmasse mit besonders guten Verarbeitungseigenschaften, gutem Flammschutz und guter Flexibilität sowie Auswaschbeständigkeit z.B. gegenüber Treibstoffen, sowie Verwendungen solcher Polyamidformmassen. Das Material ist z.B. geeignet als Material für Leitungen für Kraftstoffe im Automobilbereich oder generell flexible Formkörper einschliesslich Leitungen o. ä. für den Bahnbereich.

### STAND DER TECHNIK

Aus der EP-A-3 127 937 ist eine Polyamid-Formmasse mit einer Matrix aus Polyamid 12 bekannt, die zusätzlich Flammschutzmittel und Weichmacher enthält. Die Formmasse kann weiter Additive und Polyolefin enthalten. Zusätzlich zum Polyamid 12 kann ein Polyamid-Elastomer auf Basis von Polyamid 12 in der Matrix enthalten sein. Vorgeschlagen wird die Formmasse für flexible Bauteile, insbesondere für brandgeschützte Anwendungen im Bahnbereich. Andere Materialien als Polyamid-Basis werden nicht erwähnt.

Aus der US-A-2010/0249292 sind glasfaserverstärkte Mischungen aus teilkristallinen Polyamiden und amorphen Polyamiden bekannt, die einen Flammenschutz enthalten. Zinkborat wird als Synergist eingesetzt, und die erfindungsgemässen Beispiele beinhalten alle Böhmit. Effektiv in den Beispielen als Polyamide gearbeitet werden Systeme des Typs 6T/66, 6T/6I und Polyamid 66 jeweils mit einem Anteil von 50 % Glasfasern und ohne Weichmacher.

Aus der WO-A-2008066763 sind Gehäuse für Mobiltelefone bekannt aus einem aliphatischen Polyamid mit einem Anteil von wenigstens 30 Gewichtsprozent Glasfasern und gegebenenfalls Schlagzähmodifikator. In den Beispielen wird mit Polyamid 1010, Polyamid 614, Polyamid 612 und Polyamid 6I/6T gearbeitet, jeweils mit einem Glasfaser-Anteil von wenigstens 50 Gewichtsprozent. Flammenschutz ist kein Thema.

Aus der WO-A-2012064965 ist eine flammgeschützte Polyamid-Formmasse bekannt, wobei neben einer Verstärkung des Polyamids Böhmit und ein Polyhydric Alcohol für eine verbesserte Verarbeitung des Materials eingesetzt wird. In den Beispielen wird mit Polyamid 66/6T und Polyamid 6I/6T gearbeitet, jeweils mit 25 Gewichtsprozent Glasfasern und 14 Gewichtsprozent Flammschutzmittel.

US2014065338 offenbart ein Einschichtrohr umfassend eine schmelzgemischte thermoplastische Zusammensetzung, bestehend im Wesentlichen aus (A) einem Polyamidharz, ausgewählt aus der Gruppe bestehend aus PA 614, PA 616, PA 618 und Mischungen davon; und optional als weitere Komponente (B) einen oder mehrere polymere Zähigkeitsverbesserer; (C) einen oder mehrere Weichmacher; und (D) ein oder mehrere funktionelle Additive.

WO-A-2011000457 betrifft eine flammgeschützte Polymerzusammensetzung aus einem Polyamid oder einem Polybutylenterephthalat, die eine ausgewählte Phosphorverbindung als Flammschutzmittel enthält, sowie daraus hergestellte Formteile.

US-A-2017037198 beschreibt eine Polyamid-Formmasse, insbesondere für Bahnanwendungen, bestehend aus: (A) 50-90 Gew.-% einer Polyamidmatrix bestehend aus Polyamid 12 und ggf. bis zu 85 Gew.-% Polyamid-Elastomer auf Basis von Polyamid 12; (B) 7-28 Gew.-% Flammschutzmittel, bestehend aus wenigstens einem Metallphosphinat sowie ggf. bis zu 40% eines stickstoffhaltigen Synergisten und/oder wenigstens eines Stickstoff und Phosphor enthaltenden Flammschutzmittels; (C) 3-15 Gew.-% Weichmacher; (D) 0-15 Gew.-% Polyolefin; (E) 0-10 Gew.-% Additive und/oder partikuläre Füllstoffe, unter Ausschluss von faserförmigen Verstärkungsstoffen.

### DARSTELLUNG DER ERFINDUNG

Es ist entsprechend unter anderem Aufgabe der vorliegenden Erfindung, eine Formmasse bereitzustellen, die eine hohe Flexibilität aufweist, flammgeschützt ist, vorzugsweise halogenfrei flammgeschützt ist, und unter Verwendung üblicher Extrusionsverfahren verarbeitbar ist. Zudem soll die Formmasse auswaschungsarm sein, d. h. sie weist wenig Migration von Modifikatoren, Monomeren, Oligomeren oder Additiven auf.

Konkret betrifft die vorliegende Erfindung eine Polyamidformmasse bestehend aus folgenden Komponenten:
(A) 50-86 Gewichtsprozent, vorzugsweise 50 - 75 Gewichtsprozent Polyamidmatrix, bestehend aus
   (A1) 60-100 Gewichtsprozent mindestens eines aliphatischen Polyamides des Typs X.Y;
   (A2) 0-40 Gewichtsprozent teilkristallines Polyamid verschieden von (A1);
   wobei die Summe von (A1) und (A2) 100 Gewichtsprozent der Komponente (A) ergeben;
(B) 5-25 Gewichtsprozent wenigstens eines Polyamid-Elastomers auf Basis von Polyamid 12;
(C) 8-30 Gewichtsprozent wenigstens eines Flammschutzmittels;
(D) 1-10 Gewichtsprozent wenigstens eines Weichmachers;
(E) 0-10 Gewichtsprozent Additive verschieden von (B) - (D);
wobei die Summe der Komponenten (A) - (E) 100 Gewichtsprozent der Polyamidformmasse bilden.

Nach der Erfindung sind beim Polyamid des Typs X.Y die Bausteine X und Y wie folgt ausgewählt:
X ist ein acyclisches, aliphatisches Diamin mit 4 bis 12 Kohlenstoffatomen, vorzugsweise mit 5-10 Kohlenstoffatomen, und
Y ist aus der Gruppe bestehend aus Brassylsäure, Tetradecandisäure, Pentadecandisäure, Hexadecandisäure, Heptadecandisäure, Octadecandisäure ausgewählt, vorzugsweise als Hexadecandisäure.

Es zeigt sich, dass mit den so gewählten Anteilen an Flammschutzmittel und Weichmacher sowie Polyamid-Elastomer, wenn das Polyamid spezifisch ausgewählt ist gemäss (A1), unerwartet gute mechanische Eigenschaften und ein überraschend guter Flammenschutz erhalten werden kann.

Unter Flammschutz wird ein hoher Sauerstoffindex (LOI, nach englischem "limiting oxygen index") verstanden. Der LOI wird gemäss ISO 4589-2 (2006) gemessen, wobei Prüflinge mit hohen LOI Werten einen besseren Flammschutz aufweisen als die mit tieferen Werten. Der optimale Wert von LOI beträgt mindestens 26%, bevorzugt mindestens 28%, besonders bevorzugt mindestens 30%.

Hinsichtlich **Komponente (A)** gilt, dass Anteil an dieser Komponente in der Polyamidformmasse bevorzugtermassen im Bereich von 55-70 Gewichtsprozent, vorzugsweise im Bereich von 60-65 Gewichtsprozent liegt.

Bei der **Komponente (A1)** handelt es sich um ein Polyamid des Typs X.Y, wobei X ein vorzugsweise lineares unverzweigtes, aliphatisches Diamin mit 4 bis 12 Kohlenstoffatomen ist, und Y ausgewählt ist aus der Gruppe bestehend aus Brassylsäure, Tetradecandisäure, Pentadecandisäure, Hexadecandisäure, Heptadecandisäure, Octadecandisäure.

Vorzugsweise ist das Polyamid (A1) ausgewählt als Polyamid 514, Polyamid 515, Polyamid 516, Polyamid 517, Polyamid 518, Polyamid 614, Polyamid 615, Polyamid 616, Polyamid 617, Polyamid 618, Polyamid 916, Polyamid 1016 oder Mischungen davon. Besonders bevorzugt werden als Komponente A die Kombination von Pentandiamin und Hexadecandisäure (Polyamid 516), die Kombination von Decandiamin und Hexadecandisäure (Polyamid 1016), die Kombination von Hexamethylenediamin und Hexadecandisäure (Polyamid 616) gewählt.

Das Polyamid 516 verfügt vorzugsweise über einen Schmelzpunkt (gemessen in DSC gemäss ISO 11357-3) von 188 °C und das Polyamid 616 vorzugsweise über einen Schmelzpunkt von 196 °C, ebenfalls nach ISO 11357-3 gemessen.

Das Flammschutzmittel (Komponente C) kann beispielsweise in Form eines Masterbatches eingemischt werden. Ein solcher Masterbatch kann auf Basis des Polyamid (A1) ausgebildet sein, es kann dafür als Träger aber auch ein anderes Polyamid, beispielsweise des Typs (A2) eingesetzt werden. Es kann also ein zweites optionales teilkristallines Polyamid dafür verwendet werden als Komponente (A1), z.B. 0-30% Polyamid 6, Polyamid 12 oder eine Mischung davon. Alternativ kann das Flammschutzmittel in Form eines Masterbatch auf Basis Polyamid 516 oder Polyamid 616 eingeführt werden. Innerhalb der Komponente (A) kann der Anteil an Polyamid (A1) im Bereich von 65-90 Gewichtsprozent liegen, vorzugsweise im Bereich von 70-80 Gewichtsprozent, und der Anteil an teilkristallinem Polyamid (A2) im Bereich von 10-35 Gewichtsprozent, vorzugsweise im Bereich von 20-30 Gewichtsprozent.

Bevorzugtermassen ist das Polyamid (A1) ausgewählt aus der Gruppe Polyamid 516, Polyamid 616, Polyamid 614, Polyamid 618, Polyamid 1016, oder eine Mischung davon, insbesondere vorzugsweise als Polyamid 616 allein.

Bevorzugtermassen hat Polyamid (A1) eine relative Lösungsviskosität, gemessen in m-Kresol nach ISO 307 (2007) bei einer Temperatur von 20 °C im Bereich von 2.0-2.4 vorzugsweise von 2.05-2.35.

Weiter bevorzugtermassen hat das wenigstens eine Polyamid (A1) einen Schmelzpunkt im Bereich von 175-240 °C, vorzugsweise 177-220 °C.

Das teilkristalline Polyamid der **Komponente (A2)**, das beispielsweise als Trägermaterial für den Masterbatch eingesetzt sein kann, ist vorzugsweise ausgewählt aus der Gruppe bestehend aus: Polyamid 6, Polyamid 66, Polyamid 11, Polyamid 12, vorzugsweise Polyamid 12 oder Mischungen davon.

Der Anteil teilkristallines Polyamid (A2) (oder Teile davon) und/oder Teile von Polyamid (A1) können wie gesagt als Matrix für einen Masterbatch für wenigstens eine der Komponenten (C), (D) und/oder (E) eingesetzt werden, oder aber auch einfach sonst als Zusatz in der Matrix (A).

Der Anteil an Polyamid-Elastomer als **Komponente (B)** liegt vorzugsweise im Bereich von 8-15 Gewichtsprozent, vorzugsweise im Bereich von 9-14 Gewichtsprozent.

Das Polyamid 12 bildet in der Komponente (B) die Hartsegmente, daneben gibt es, damit es ein Elastomer ist, ein Weichsegment, das eine amorphe Phase ausbildet.

Das Polyamid-Elastomer ist entsprechend vorzugsweise aufgebaut aus Hartsegmenten auf Basis von Polyamid 12 und Weichsegmenten beispielsweise auf Basis von Polyetherdiol, Polyesterdiol, Dimerdiol oder Polyetherdiamin oder Polyesterdiamin. Vorzugsweise sind die Polyether-Blöcke von -diol und/oder -diamin aufgebaut auf Basis von, vorzugsweise ausschliesslich, wenigstens einem Polyoxyalkylen Baustein. Das Polyetherdiol ist vorzugsweise aufgebaut auf Basis von, vorzugsweise ausschliesslich, wenigstens einem C2-C5 (bevorzugt C2-C4) Polyoxyalkylen Baustein, insbesondere vorzugsweise ausgewählt aus folgender Gruppe: Ethylenoxid, Propylenoxid, Tetrahydrofuran oder eine Mischung davon, z.B. EO/PO.

Das Polyamid-Elastomer verfügt gemäss einer weiteren bevorzugten Ausführungsform über mindestens eine amorphe Phase, welche bevorzugtermassen von der Weichsegment-Einheit, dem Etheranteil, Esteranteil oder Dimerdiolanteil, herrührt. Die Glasübergangstemperatur respektive der Glasübergangspunkt dieser amorphen Phase betragen gemäss einer bevorzugten Ausführungsform höchstens 20°C. Diese amorphe Phase der Polyetheramide verfügt bevorzugtermassen über einen Glasübergangspunkt von weniger als 0 °C, bevorzugt von weniger als -20 °C. Bevorzugt liegt der Glasübergangspunkt des Weichsegments im Bereich von -70 °C bis 0 °C, insbesondere bevorzugt im Bereich von -60 °C bis -20 °C, jeweils bestimmt mittels DSC Messung gemäss ISO 11357-2.

Als Weichsegmente kommen beispielsweise folgende Systeme infrage: C36-Dimerdiol; Polyesterdiol, vorzugsweise auf Basis von C36-Dimerfettsäure und/oder von C36-Dimerdiol, Polyetherdiol auf Basis von Ethylenoxid und/oder Propylenoxid und/oder Tetrahydrofuran; Polyetherdiamin auf Basis von Ethylenoxid und/oder Propylenoxid und/oder Tetrahydrofuran.

Die C36-Dimersäuren und die C36-Dimerdiole werden durch thermische Dimerisierung von ungesättigten C18-Carbonsäuren oder deren Ester hergestellt. Ausgangsstoffe sind z.B. Tallölfettsäuren sowie die Öl - oder Linolensäure.

Typischerweise haben die Weichsegmente eine zahlenmittlere Molmasse im Bereich von 200 - 3000 g/mol.

Die erfindungsgemässen Polyamid-Elastomere weisen bevorzugtermassen einen Zug-E-Modul von höchstens 1200 MPa, bevorzugt von höchstens 1000 MPa und besonders bevorzugt von höchstens 700 MPa auf. Damit besitzen die Polyamid-Elastomere bevorzugt Steifigkeiten im Zug-E-Modul-Bereich von 50 bis 1000 MPa und besonders bevorzugt im Bereich von 80 bis 700 MPa.

Das Polyamid-Elastomer (B) ist also bevorzugt aufgebaut aus Hartsegmenten auf Basis von Polyamid 12 und amorphen Weichsegmenten auf Basis von wenigstens einem der folgenden Strukturelemente: Polyetherdiol, Polyesterdiol, Dimerdiol, Polyesterdiamin, Polyetherdiamin. Dabei sind die Polyether-Blöcke typischerweise aufgebaut auf Basis von oder ausschliesslich, wenigstens einem C2-C5 (bevorzugt C2-C4, insbesondere bevorzugt C2 oder C4) Polyoxyalkylen Baustein. Bevorzugtermassen sind die Bausteine ausgewählt aus folgender Gruppe: Ethylenoxid, Propylenoxid, Tetrahydrofuran oder eine Mischung davon.

Das Flammschutzmittel der **Komponente (C)** liegt bevorzugt in einem Anteil im Bereich von 12-28 Gewichtsprozent, vorzugsweise im Bereich von 18-25 Gewichtsprozent vor. Das Flammschutzmittel der Komponente (C) ist vorzugsweise ausgewählt als vollständig halogenfreies Flammschutzmittel.

Das Flammschutzmittel der Komponente (C) kann dabei ausgewählt sein aus der Gruppe der Melamin-basierten Flammschutzmittel, und/oder der Phosphor-basierten Flammschutzmittel. Vorzugsweise sind Melamin-basierte Flammschutzmittel ausgewählt aus der Gruppe der Melamincyanurate und/oder der Melaminpolyphosphate, und weiterhin vorzugsweise sind Phosphor-basierte Flammschutzmittel ausgewählt aus der Gruppe der Phosphinsäuresalze und/oder Diphosphinsäuresalze und/oder der Alkylphosphate und/oder Arylphosphate, vorzugsweise ausgewählt aus der Gruppe bestehend aus Cresyldiphenylphosphat, 2-Ethylhexyldiphenylphosphat, Tricresylphosphat, Tris-(2-ethylhexyl)phosphat, Triphenylphosphat oder Mischungen davon.

Die Flammschutzmittel können dabei wenigstens teilweise auch eine Wirkung als Weichmacher haben. Soweit Substanzen sowohl eine erhebliche Wirkung als Flammschutzmittel als auch als Weichmacher haben, werden sie im Rahmen der vorliegenden Erfindung den Flammschutzmitteln, d.h. Komponente (C) zugerechnet. Solche Systeme sind beispielsweise die oben genannten Alkylphosphate und/oder Arylphosphate, die neben ihrer Funktion als Flammenschutz auch eine gewisse Wirkung als Weichmacher zeigen.

Die Flammschutz-Komponente (C) liegt in der Polyamid-Formmasse vorzugsweise in einem Anteil von 7-28 Gew.-% vor. Es kann sich dabei ausschliesslich um ein Flammschutzmittel bestehend aus mindestens einem Melaminderivat handeln. Solche Derivate können zum Beispiel Melamincyanurat oder Melaminpolyphosphat sein. Es können aber auch bis zu 20 Gew.% mindestens eines Phosphinsäuresalzes und/oder eines Diphosphinsäuresalzes sein. Vorzugsweise ist das mindestens eine Metallphosphinat der Komponente ausgewählt als Phosphinsäuresalz und/oder Diphosphinsäuresalz, wobei es sich vorzugsweise um ein Phosphinsäuresalz der allgemeinen Formel (I) und/oder Formel (II) und/oder deren Polymere handelt 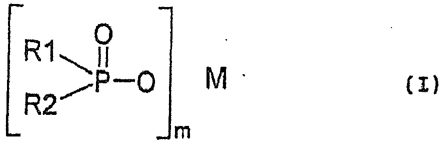 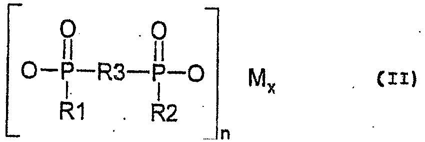 wobei
R1, R2 gleich oder verschieden sind und bevorzugt C1-C8-Alkyl, linear oder verzweigt und/oder Aryl sind;
R3 C1-C10-Alkylen, linear oder verzweigt, C6-C10-Arylen, -Alkylarylen oder Arylalkylen sind;
M ein Metallion aus der 2. oder 3. Haupt- oder Nebengruppe des Periodensystems ist; und
m 2 oder 3;
n 1 oder 3;
x 1 oder 2

Es besteht auch die Möglichkeit die Komponente (C) mit einem weiteren Flammschutzmittel zu ergänzen. Dieses kann zum Beispiel ein Arylphosphat umfassen. Der Weichmacher der **Komponente (D)** liegt vorzugsweise in einem Anteil im Bereich von 1 -5 Gewichtsprozent, vorzugsweise im Bereich von 1.5-3 Gewichtsprozent vor. Wie bereits dargelegt wird eine Substanz, die als Weichmacher wirkt aber zusätzlich auch noch Flammenschutz gewährleistet, nicht als Teil der Komponente (D) betrachtet. Komponente (D) schliesst also Substanzen nicht ein, die zwar als Weichmacher wirken, aber zusätzlich auch noch einen wesentlichen Flammenschutz-Beitrag liefern. Spezifisch ausgeschlossen aus den Weichmachern der Komponente (D) sind damit Alkylphosphate und/oder Arylphosphate.

Der wenigstens eine Weichmacher (D) ist üblicherweise ausgewählt als Hydroxybenzoesäureester (wie z.B. 2-Hexyldecyl-4-hydroxybenzoat, HDPB) und/oder Sulfonamid-basierter Weichmacher, bevorzugt der Klasse der N-substituierten Sulfonamid-Weichmacher, insbesondere bevorzugt als BBSA.

Als Hydroxybenzoesäureester-basierter Weichmacher kommen z.B. Systeme wie folgt in Frage: 2-Hexyldecyl-4-hydroxybenzoat, Hexyloxyethoxyethyl p-hydroxybenzoat; Hexyloxypropoxypropyl p-hydroxybenzoat; Hexyloxybutoxybutyl p-hydroxybenzoat; Octyloxyethoxyethyl p-hydroxybenzoat; Octyloxypropoxypropyl p-hydroxybenzoat; Octyloxybutoxybutyl p-hydroxybenzoat; 2'-Ethylhexyloxyethoxyethyl p-hydroxybenzoat; 2'-Ethylhexyloxypropoxypropyl p-hydroxybenzoat; 2'-Ethylhexyloxybutoxybutyl p-hydroxybenzoat; Decyloxyethoxyethyl p-hydroxybenzoat; Decyloxypropoxypropyl p-hydroxybenzoat; Decyloxybutoxybutyl p-hydroxybenzoat, oder Mischungen davon.

Der Anteil **Additive (E)** liegt vorzugsweise im Bereich von 0.01-3 Gewichtsprozent, vorzugsweise im Bereich von 0.5-1.5 Gewichtsprozent.

Die Additive (E) sind vorzugsweise ausgewählt aus wenigstens einem Zuschlagstoff der folgenden Gruppe: Antioxidans; nicht leitfähige Pigmente; UV-Absorber; UV-Stabilisatoren; Hitze- und Wärmestabilisatoren; Hydrolysestabilisatoren; Farbstoffe; Haftvermittler; Verträglichkeitsvermittler; Gleitmittel; Entformungshilfsmittel; organische oder anorganische Pigmente; IR-Absorber, Antistatika, Antiblockmittel, Nukleierungsmittel, Kristallisationsbeschleuniger, Kristallisationsverzögerer, kettenverlängernde Additive, optische Aufheller, photochrome Additive, und Mischungen davon.

Bevorzugt ist die Komponente (E) frei von Ethylen-olefin-basierten Elastomeren.

Weiter betrifft die vorliegende Erfindung einen Formkörper, insbesondere eine Kunststoffleitung mit wenigstens einer Schicht aus einer Polyamidformmasse wie oben dargelegt, vorzugsweise dadurch gekennzeichnet, dass die Kunststoffleitung als Einschichtformkörper oder Mehrschichtverbund in Form eines einen Innenraum umschliessenden Hohlkörpers ausgebildet ist, und die Schicht aus einer Polyamidformmasse wie oben dargelegt die den Mehrschichtverbund nach innen und/oder aussen abschliessende Schicht bildet.

Weiter betrifft die vorliegende Erfindung einen solchen Formkörper, insbesondere in Form einer Kunststoffleitung, der dadurch gekennzeichnet ist, dass die Schicht auf Basis von Polyamid 616 als Komponente (A1) ausgebildet ist. Die Schicht kann dabei eine Kupferstabilisierung aufweisen, vorzugsweise auf Basis von CuI (z.B. CuI/KI), in einem Anteil im Bereich von 0.01-0.10 Gewichtsprozent, oder in einem Anteil von 0.03-0.07 Gewichtsprozent, wobei die Gewichtsprozent bezogen sind auf 100 Gewichtsprozent der Polyamidformmasse.

Die Formmassen sind generell geeignet für flexible Bauteile für brandgeschützte Anwendungen, beispielsweise im Bahnbereich. Sie können entsprechend als Beschichtung, Abdeckung, Folie, Profil, Rohr, Wellrohr, Hohlkörper, Dichtung, Verkleidung, Halterung, Gehäuse, Ummantelung, Elektro- und Elektronikbauteil wie beispielsweise Stecker und Lüfter und Teile davon ausgestaltet sein.

Eine solche Kunststoffleitung oder ein solches Bauteil kann dadurch gekennzeichnet sein, dass die Schicht aus einer Polyamidformmasse wie oben dargelegt, wenn sie als Einzelschicht ausgebildet ist, eine Dicke im Bereich von 0.5-2.5 mm, bevorzugtermassen im Bereich von 0.75-1.5 mm aufweist.

Oder diese Schicht hat, wenn sie als Innen- und/oder Aussenschicht ausgebildet ist, eine Dicke im Bereich von 0.3-0.6 mm, vorzugsweise im Bereich von 0.4-0.5 mm. Gibt es zusätzlich eine zwischen einer Innen- und einer Aussenschicht angeordnete Mittelschicht, vor allem bei einer Leitung, vorzugsweise aus EVOH, so hat diese typischerweise eine Dicke im Bereich von 0.05-0.2 mm, vorzugsweise im Bereich von 0.075-0.125 m. Die Gesamtwandstärke eines Mehrschichtverbundes liegt typischerweise im Bereich von 0.5-2.5 mm, bevorzugtermassen im Bereich von 0.75-1.5 mm.

Ein solcher Formkörper respektive eine solche Kunststoffleitung kann in einem Extrusionsprozess, oder für den Fall einer Mehrschicht-Kunststoffleitung, in einem Coextrusionsprozess, einem Tandemverfahren oder einem Ummantelungsprozess hergestellt werden respektive sein.

Der Formkörper in Form einer Leitung kann dabei wenigstens abschnittsweise als Wellrohr ausgebildet sein, vorzugsweise als Leitung für den Bahnbereich oder für Verbrennungsmotoren, insbesondere im Automobilbereich, insbesondere für Kraftstoff, Harnstoff oder Kühlmittel.

Zu guter Letzt betrifft die vorliegende Erfindung ein Verfahren zur Herstellung einer solchen Kunststoffleitung, dadurch gekennzeichnet, dass die wenigstens eine, oder im Fall einer Mehrschiclit-Kunststoffleitung, die 2 oder 3 Schichten, in einem kontinuierlichen und/oder diskontinuierlichen Prozess, bevorzugt in einem Extrusionsblasformen, einer Tandemextrusion, einem Ummantelungsverfahren oder einem (Co)Extrusionsprozess, zu einem Hohlkörper, insbesondere bevorzugt zu einem Rohr respektive einer Leitung oder einem Behälter geformt werden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In den Zeichnungen zeigt:

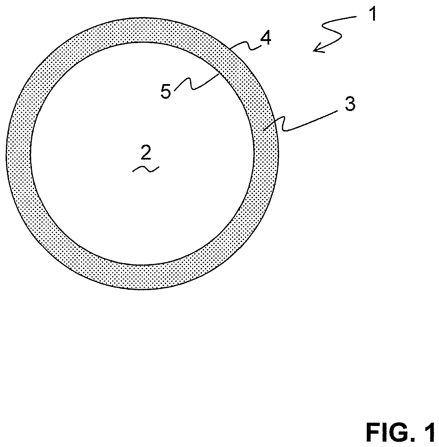

- Fig. 1: eine Leitung in einer Schnittdarstellung senkrecht zur Verlaufsrichtung

### BESCHREIBUNG BEVORZUGTER AUSFÜHRUNGSFORMEN

Figur 1 zeigt eine beispielhafte Leitung 1 unter Verwendung einer flexiblen und flammgeschützten Polyamidformmasse nach der Erfindung in einem Schnitt quer zur Hauptverlaufsrichtung.

Die Querschnittsfläche kann dabei über die Hauptverlaufsrichtung konstant sein, d.h. das Rohr kann eine im Wesentlichen hohlzylindrische Form haben.

Die Querschnittsfläche kann aber auch über die Hauptverlaufsrichtung variieren, beispielsweise in Form eines Wellrohres.

Ein Innenraum 2 wird von der Rohrwand 3 umschlossen. Auf den Innenraum 2 folgt also radial nach aussen eine Leitungsschicht 3, welche mit der Innenfläche 5 an den Innenraum 2 grenzt und diesen begrenzt. Diese Schicht ist auf Basis der erfindungsgemässen Polyamidformmasse ausgebildet.

Die Aussenfläche 4 der Leitungsschicht 3 begrenzt die Leitung 1 nach aussen.

Die Leitung kann aber auch als Mehrschicht-Leitung ausgestaltet sein, beispielsweise mit einer Barriereschicht zwischen zwei weiteren Schichten, die Barriereschicht kann beispielsweise auf Basis eines fluorierten Polymers oder EVOH ausgebildet sein. Aus dem hier vorgeschlagenen Material kann die Innenschicht, die Aussenschicht oder auch beide Schichten ausgebildet sein. Bevorzugt werden weitere Schichten als die aus der erfindungsgemässen Formmasse ebenfalls aus Flammschutzmittel enthaltenden Formmassen hergestellt.

### Eingesetzte Ausgangsmaterialien:

| | |
|---|---|
| PA616 (A1): | Polyamid 616 mit einer Lösungsviskosität von ηᵣₑₗ = 2.20 (Lösung von 0.5 g Polyamid gelöst in 100 mL m-Kresol) und einem Schmelzpunkt von 196 °C, EMS-CHEMIE AG; |
| PA12 (A2) | Polyamid 12 in Form von Grilamid L16 mit einer Lösungsviskosität von ηᵣₑₗ =1.66 (Lösung von 0.5 g Polyamid gelöst in 100 mL m-Kresol) und einem Schmelzpunkt von 178 °C, EMS-CHEMIE AG; |
| PA Elastomer (B): | |
| | Grilflex ELG 5930, Polyetheramid auf Basis von Polyamid 12 und auf Basis von Polyoxypropylendiamin mit einer Lösungsviskosität von ηᵣₑₗ = 1.9 (0.5 Gew.-% in m-Kresol, 20 °C) und einem Glasübergangspunkt von 20 °C und einem Schmelzpunkt von 162 °C, EMS-CHEMIE AG; |
| Flammschutzmittel (C): | |
| (C1) | DISFLAMOLL DPK: Diphenylkresylphosphat, Flammschutzmittel, wirkt teilweise auch als Weichmacher, Lanxess AG |
| (C2) | Exolit OP1230: Phosphororganisches Salz (Aluminum diethylphosphinat), Flammschutzmittel, Clariant Produkte GmbH |
| (C3) | Melamincyanurat: Melapur MC25, BASF SE; |
| Weichmacher (D): | |
| | BBSA (N-Butylbenzolsulfonamid). Zum Beispiel erhältlich unter dem Markennamen Uniplex 214, von Lanxess; |
| Stabilisator (E): | |
| | Hostanox PAR 24 Pwd: Antioxidans, Clariant Produkte GmbH, in einem Anteil von 0.4 Gewichtsprozent bezogen auf die Gesamtmasse Irganox 245: Phenolisches Antioxidans, BASF SE, in einem Anteil von 0.2 Gewichtsprozent bezogen auf die Gesamtmasse Kupferstabilisator: Als Kupferstabilisator wurde CuI-KI im CuI:KI Verhältnis 1:6 und in einem Anteil von 0.05 Gewichtsprozent bezogen auf die Gesamtmasse eingesetzt. Das Kupfer-(I)-iodid ist zum Beispiel von der Firma William Blythe Ltd kommerziell erhältlich, und das Kaliumiodid von der Firma Liquichem Handelsgesellschaft mbH. |

### Herstellung der Prüfkörper:

Die Herstellung der Formkörper erfolgt auf einer Spritzgussmaschine Arburg Allrounder 320-210-750 mit ansteigendem Zylindertemperaturprofil 240 - 260 °C und Einspritzdrücken von 1200 - 1800 bar. Die Formtemperatur beträgt 40 °C. Die Geometrie der Formkörper entspricht den Vorgaben der entsprechenden Prüfnormen.

### Vorgenommene Messungen:

***Bruchspannung und E-Modul*:** Wurden nach ISO 527 gemessen mit einer Zuggeschwindigkeit von 1 mm/min an einem ISO 3167-konformen Zugstab.
***Relative Viskosität*:** DIN EN ISO 307 (2007), in 0,5 Gew.-%-iger m-Kresollösung bei einer Temperatur von 20 °C.
***Thermisches Verhalten*** (Schmelzpunkt Tₘ und Glasumwandlungstemperatur (T_{g}): ISO-Norm 11357-1 (2016), -2 (2013) und -3 (2011), Granulat, die Differential Scanning Calorimetry (DSC) wird mit Aufheizrate von 20 °C/min durchgeführt.
***Schlagzähigkeit und Kerbschlagzähigkeit nach Charpy*:** Wurden nach ISO 179/keU bzw. ISO 179/keA am ISO-Prüfstab, Norm ISO/CD 3167, Typ Bl, 80 x 10 x 4mm bei einer Temperatur von 23°C gemessen
***Sauerstoffindex*:** Der Sauerstoffindex (LOI = Limiting Oxygen Index) ist die minimale Sauerstoff-konzentration eines Sauerstoff-Stickstoff-Gemisches, bei der die Verbrennung eines vertikal angeordneten Prüfkörpers unter den Prüfbedingungen anhält. Der LOI wird gemäss ISO 4589-2 (2006) bestimmt.

**Tabelle1: Zusammensetzungen**

| | | B1 | B2 | VB1 |
|---|---|---|---|---|
| A1 | Polyamid 616 | 45.35 | 60.35 | |
| A2 | Polyamid 12 | 18.00 | | 63.35 |
| B | PA Elastomer | 10.00 | 15.00 | 10.00 |
| C1 | Flammschutzmittel Disflamoll DPK | 6.00 | 8.00 | 6.00 |
| C2 | Flammschutzmittel Exolit OP 1230 | | 15.0 | |
| C3 | Flammschutzmittel MC | 18.00 | | 18.00 |
| D | Weichmacher | 2.00 | 1.00 | 2.00 |
| E | Stabilisator | 0.65 | 0.65 | 0.65 |

**Tabelle 2: Eigenschaften**

| | Einheit | B1 | B2 | VB1 |
|---|---|---|---|---|
| Glasübergangstemperatur | °C | 30 | 35 | 25 |
| Schmelzpunkt | °C | 187 | 195 | 178 |
| E-Modul | MPa | 680 | 600 | 700 |
| Bruchspannung | MPa | 53 | 45 | 40 |
| Schlagzähigkeit (Charpy, 23 °C) | kJ/m² | o.B | o.B | o.B |
| Kerbschlagzähigkeit (Charpy, 23 °C) | kJ/m² | o.B | o.B | 100 |
| LOI | % | 30 | 33 | 28 |

| | | | | |
|---|---|---|---|---|
| o.B = ohne Bruch | | | | |

Wie dargestellt zeigen die erfindungsgemässen Rohrbeispiele neben sehr guten Sauerstoffindex-Werten Verbesserungen in den mechanischen Eigenschaften gegenüber dem Vergleichsbeispiel VB1. Bei Variierung der Art des Flammschutzmittels in den erfindungsgemässen Beispielen B1 und B2 werden gute LOI behalten. Die Erfindung zeigt einen versatilen Weg, eine halogenfrei flammgeschützte Formmasse bereit zu stellen. Für die vorgesehene Anwendung der Formmasse weisen die Formmassen die notwendige Flexibilität auf und erfüllen gleichzeitig die Sicherheitsanforderungen bezüglich niedriger Entflammbarkeit.

**BEZUGSZEICHENLISTE**

| | | | |
|---|---|---|---|
| 1 | Leitung | 4 | Aussenfläche von 1 |
| 2 | Innenraum von 1 | 5 | Innenfläche von 1 |
| 3 | Leitungsschicht | | |

## Patentansprüche

1. Polyamidformmasse bestehend aus folgenden Komponenten:
(A) 50-86 Gewichtsprozent Polyamidmatrix, bestehend aus (A1)
60-100 Gewichtsprozent mindestens eines aliphatischen Polyamides des Typs
X.Y,
wobei
X ein acyclisches, aliphatisches Diamin mit 4 bis 12 Kohlenstoffatomen ist, und
Y ausgewählt ist aus der Gruppe bestehend aus Brassylsäure, Tetradecandisäure, Pentadecandisäure, Hexadecandisäure, Heptadecandisäure, Octadecandisäure;
(A2) 0-40 Gewichtsprozent teilkristallines Polyamid verschieden von (A1);
wobei die Summe von (A1) und (A2) 100 Gewichtsprozent der Komponente (A) ergeben;
(B) 5-25 Gewichtsprozent wenigstens eines Polyamid-Elastomers auf Basis von Polyamid 12;
(C) 8-30 Gewichtsprozent wenigstens eines Flammschutzmittels;
(D) 1-10 Gewichtsprozent wenigstens eines Weichmachers;
(E) 0-10 Gewichtsprozent Additive verschieden von (B)-(D);
wobei die Summe der Komponenten (A)-(E) 100 Gewichtsprozent der Polyamidformmasse bilden.

2. Polyamidformmasse nach Anspruch 1, **dadurch gekennzeichnet, dass** der Anteil an Komponente (A) in der Polyamidformmasse im Bereich von 55-70 Gewichtsprozent, vorzugsweise im Bereich von 60-65 Gewichtsprozent liegt, und/oder dass innerhalb der Komponente (A) der Anteil an Polyamid (A1) im Bereich von 65-90 Gewichtsprozent liegt, vorzugsweise im Bereich von 70-80 Gewichtsprozent, und der Anteil an teilkristallinem Polyamid (A2) im Bereich von 10-35 Gewichtsprozent, vorzugsweise im Bereich von 20-30 Gewichtsprozent.

3. Polyamidformmasse nach einem der vorhergehenden Ansprüche, **dadurch gekennzeichnet, dass** das Polyamid (A1) ausgewählt ist als X.Y, wobei X ein lineares unverzweigtes, aliphatisches Diamin mit 4 bis 12 Kohlenstoffatomen ist, und Y ausgewählt ist aus der Gruppe bestehend aus Brassylsäure, Tetradecandisäure, Pentadecandisäure, Hexadecandisäure, Heptadecandisäure, Octadecandisäure,
und/oder dass das Polyamid (A1) eine relative Lösungsviskosität, gemessen in m-Kresol nach ISO 307 (2007) bei einer Temperatur von 20 °C im Bereich von 2.0-2.4 vorzugsweise von 2.05-2.35, aufweist,
und/oder dass das wenigstens eine Polyamid (A1) einen Schmelzpunkt im Bereich von 175-240°C, vorzugsweise 177-220 °C aufweist.

4. Polyamidformmasse nach einem der vorhergehenden Ansprüche, **dadurch gekennzeichnet, dass** das Polyamid (A1) ausgewählt ist aus der folgen Gruppe: Polyamid 514, Polyamid 515, Polyamid 516, Polyamid 517, Polyamid 518, Polyamid 614, Polyamid 615, Polyamid 616, Polyamid 617, Polyamid 618, Polyamid 916, Polyamid 1016 oder Mischungen davon, vorzugsweise als Polyamid 616.

5. Polyamidformmasse nach einem der vorhergehenden Ansprüche, **dadurch gekennzeichnet, dass** das teilkristalline Polyamid der Komponente (A2) ausgewählt ist aus der Gruppe bestehend aus: Polyamid 6, Polyamid 66, Polyamid 11, Polyamid 12, vorzugsweise Polyamid 12;
und/oder dass der Anteil teilkristallines Polyamid (A2) und/oder Teile von Polyamid (A1) als Matrix für einen Masterbatch für wenigstens eine der Komponenten (C), (D) und/oder (E) eingesetzt ist.

6. Polyamidformmasse nach einem der vorhergehenden Ansprüche, **dadurch gekennzeichnet, dass** der Anteil an Polyamid-Elastomer (B) im Bereich von 8-15 Gewichtsprozent, vorzugsweise im Bereich von 9-14 Gewichtsprozent liegt, und/oder dass das Polyamid-Elastomer (B) aufgebaut ist aus Hartsegmenten auf Basis von Polyamid 12 und amorphen Weichsegmenten auf Basis von wenigstens einem der folgenden Strukturelemente: Polyetherdiol, Polyesterdiol, Dimerdiol, Polyetherdiamin,
wobei vorzugsweise die Polyether-Blöcke von -diol und/oder -diamin aufgebaut sind auf Basis von, vorzugsweise ausschliesslich, wenigstens einem C2-C5 (bevorzugt C2-C4) Polyoxyalkylen Baustein, insbesondere vorzugsweise ausgewählt aus folgender Gruppe: Ethylenoxid, Propylenoxid, Tetrahydrofuran oder eine Mischung davon,
und/oder dass das Polyamid-Elastomer (B) eine amorphe Phase mit einer Glasübergangstemperatur von höchstens 30 °C oder höchstens 20 °C, vorzugsweise höchstens 0 °C, oder weniger als -20 °C aufweist, wobei vorzugsweise die Glasübergangstemperatur der amorphen Phase im Bereich von (-70°C) - (0 °C), insbesondere bevorzugt im Bereich von (-60 °C) - (-20 °C) liegt, und/oder dass das Polyamid-Elastomer (B) einen Zug-E-Modul von höchstens 1200 MPa oder von höchstens 1000 MPa oder höchstens 700 MPa aufweist, vorzugsweise im Bereich von 50-1000 MPa oder 80-700 MPa.

7. Polyamidformmasse nach einem der vorhergehenden Ansprüche, **dadurch gekennzeichnet, dass** wenigstens eine der folgenden Massgaben gilt:
das Flammschutzmittel der Komponente (C) liegt in einem Anteil im Bereich von 12-28 Gewichtsprozent, vorzugsweise im Bereich von 18-25 Gewichtsprozent vor,
das Flammschutzmittel der Komponente (C) ist ausgewählt als vollständig halogenfreies Flammschutzmittel,
das Flammschutzmittel der Komponente (C) ist ausgewählt aus der Gruppe der Melamin-basierten Flammschutzmittel, der Phosphor-basierten Flammschutzmittel, oder beides, wobei vorzugsweise Melamin-basierte Flammschutzmittel ausgewählt sind aus der Gruppe der Melamincyanurate, der Melaminpolyphosphate, und weiterhin vorzugsweise Phosphor-basierte Flammschutzmittel ausgewählt sind aus der Gruppe der Phosphinsäuresalze, Diphosphinsäuresalze, Alkylphosphate, Arylphosphate, oder Kombinationen davon, vorzugsweise ausgewählt aus der Gruppe bestehend aus Cresyldiphenylphosphat, 2-Ethylhexyldiphenylphosphat, Tricresylphosphat, Tris-(2-ethylhexyl)phosphat, Triphenylphosphat oder Mischungen davon.

8. Polyamidformmasse nach einem der vorhergehenden Ansprüche, **dadurch gekennzeichnet, dass** der Weichmacher der Komponente (D) in einem Anteil im Bereich von 1.5-5 Gewichtsprozent, vorzugsweise im Bereich von 1.5-3 Gewichtsprozent vorliegt,
und/oder dass der wenigstens eine Weichmacher (D) ausgewählt ist als p-Hydroxybenzoesäureester- und/oder Sulfonamid-basierter Weichmacher, bevorzugt der Klasse der N-substituierten Sulfonamid-Weichmacher, insbesondere bevorzugt als BBSA.

9. Polyamidformmasse nach einem der vorhergehenden Ansprüche, **dadurch gekennzeichnet, dass** der Anteil Additive (E) im Bereich von 0.01-3 Gewichtsprozent, vorzugsweise im Bereich von 0.5-1.5 Gewichtsprozent liegt, und/oder dass Additive (E) ausgewählt sind aus wenigstens einem Zuschlagstoff der folgenden Gruppe: Antioxidans; nicht leitfähige Pigmente; UV-Absorber; UV-Stabilisatoren; Hitze- und Wärmestabilisatoren; Hydrolysestabilisatoren; Farbstoffe; Haftvermittler; Verträglichkeitsvermittler; Gleitmittel; Entformungshilfsmittel; organische oder anorganische Pigmente; IR-Absorber, Antistatika, Antiblockmittel, Nukleierungsmittel, Kristallisationsbeschleuniger, Kristallisationsverzögerer, kettenverlängernde Additive, optische Aufheller, photochrome Additive, und Mischungen davon.

10. Formkörper, insbesondere Kunststoffleitung, mit wenigstens einer Schicht aus einer Polyamidformmasse nach einem der vorhergehenden Ansprüche, vorzugsweise **dadurch gekennzeichnet, dass** die Kunststoffleitung als Einschichtformkörper oder Mehrschichtverbund (1) in Form eines einen Innenraum (2) umschliessenden Hohlkörpers ausgebildet ist, und die Schicht (3) aus einer Polyamidformmasse nach einem der vorhergehenden Ansprüche die den Mehrschichtverbund (1) nach innen und/oder aussen abschliessende Schicht bildet.

11. Formkörper, insbesondere Kunststoffleitung, nach Anspruch 10, **dadurch gekennzeichnet, dass** die Schicht (3) auf Basis von Polyamid 616 als Komponente (A1) ausgebildet ist,
und/oder dass die Schicht (3) eine Kupferstabilisierung aufweist, vorzugsweise auf Basis von CuI, vorzugsweise als CuI/KI bevorzugt in einem Verhältnis von 1:4-1:8, in einem Anteil im Bereich von 0.01-0.10 Gewichtsprozent, oder in einem Anteil von 0.03-0.07 Gewichtsprozent, wobei die Gewichtsprozent bezogen sind auf 100 Gewichtsprozent der Polyamidformmasse.

12. Kunststoffleitung nach einem der vorhergehenden Ansprüche 10 - 11, **dadurch gekennzeichnet, dass** die Schicht aus einer Polyamidformmasse nach einem der Ansprüche 1-9, wenn sie als Einzelschicht ausgebildet ist, eine Dicke im Bereich von 0.5-2.5 mm, bevorzugtermassen im Bereich von 0.75-1.5 mm aufweist, oder, wenn sie als Innen- und/oder Aussenschicht ausgebildet ist, eine Dicke im Bereich von 0.3-0.6 mm, vorzugsweise im Bereich von 0.4-0.5 mm aufweist,
und, falls vorhanden, eine zwischen einer Innen- und einer Aussenschicht angeordnete Mittelschicht, vorzugsweise aus EVOH oder einem Fluorpolymer, eine Dicke im Bereich von 0.05-0.2 mm, vorzugsweise im Bereich von 0.075-0.125 mm aufweist,
wobei vorzugsweise die Gesamtwandstärke eines Mehrschichtverbundes im Bereich von 0.5-2.5 mm, bevorzugtermassen im Bereich von 0.75-1.5 mm liegt.

13. Formkörper, insbesondere Kunststoffleitung, nach einem der vorhergehenden Ansprüche 10 - 12, **dadurch gekennzeichnet, dass** er in einem Extrusionsprozess, oder für den Fall einer Mehrschicht-Kunststoffleitung, in einem Coextrusionsprozess hergestellt ist,
und/oder dass der Formkörper in Form einer Leitung ausgebildet ist, welche wenigstens abschnittsweise als Wellrohr ausgebildet sein, vorzugsweise als Leitung für den Bahnbereich oder für Verbrennungsmotoren, insbesondere im Automobilbereich, insbesondere für Kraftstoff, Harnstoff oder Kühlmittel.

14. Formkörper, insbesondere Kunststoffleitung, nach einem der vorhergehenden Ansprüche 10 - 13, **dadurch gekennzeichnet, dass** er einen Sauerstoffindex (LOI, gemäss ISO 4589-2 (2006)) von mindestens 26%, bevorzugt mindestens 28%, besonders bevorzugt mindestens 30% aufweist.

15. Verfahren zur Herstellung einer Kunststoffleitung nach einem der vorhergehenden Ansprüche 10 - 14, **dadurch gekennzeichnet, dass** die wenigstens eine, oder im Fall einer Mehrschicht-Kunststoffleitung, die 2 oder 3 Schichten, in einem kontinuierlichen und/oder diskontinuierlichen Prozess, bevorzugt in einem Extrusionsblasformen, einer Tandemextrusion, einem Ummantelungsverfahren oder einem (Co)Extrusionsprozess, zu einem Hohlkörper, insbesondere bevorzugt zu einem Rohr respektive einer Leitung oder einem Behälter geformt werden.

## Claims

1. Polyamide moulding compound consisting of the following components:
(A)50-86 weight percent polyamide matrix consisting of
(A1) 60-100 weight percent of at least one aliphatic polyamide of the type
X.Y,
where
X is an acyclic, aliphatic diamine having 4 to 12 carbon atoms, and
Y is selected from the group consisting of brassylic acid, tetradecanedioic acid, pentadecanedioic acid, hexadecanedioic acid, heptadecanedioic acid, octadecanedioic acid;
(A2) 0-40 % by weight of semi-crystalline polyamide other than (A1);
where the sum of (A1) and (A2) is 100% by weight of component (A);
(B)5-25 % by weight of at least one polyamide elastomer based on polyamide 12;
(C)8-30% by weight of at least one flame retardant;
(D)1-10% by weight of at least one plasticizer;
(E)0-10 % by weight of additives other than (B)-(D);
the sum of components (A)-(E) constituting 100% by weight of the polyamide moulding composition.

2. Polyamide moulding composition according to claim 1, **characterised in that**
the proportion of component (A) in the polyamide moulding composition is in the range of 55-70 weight percent, preferably in the range of 60-65 weight percent,
and/or **in that** within component (A) the proportion of polyamide (A1) is in the range of 65-90% by weight, preferably in the range of 70-80% by weight, and the proportion of partially crystalline polyamide (A2) is in the range of 10-35% by weight, preferably in the range of 20-30% by weight.

3. Polyamide moulding composition according to any of the preceding claims, **characterised in that** the polyamide (A1) is selected as X. Y, wherein X is a linear unbranched aliphatic diamine having 4 to 12 carbon atoms, and Y is selected from the group consisting of brassylic acid, tetradecanedioic acid, pentadecanedioic acid, hexadecanedioic acid, heptadecanedioic acid, octadecanedioic acid,
and/or that the polyamide (A1) has a relative solution viscosity, measured in m-cresol according to ISO 307 (2007) at a temperature of 20°C in the range of 2.0-2.4, preferably 2.05-2.35,
and/or that the at least one polyamide (A1) has a melting point in the range of 175-240°C, preferably 177-220°C.

4. Polyamide moulding composition according to any of the preceding claims, **characterised in that** the polyamide (A1) is selected from the following group: polyamide 514, polyamide 515, polyamide 516, polyamide 517, polyamide 518, polyamide 614, polyamide 615, polyamide 616, polyamide 617, polyamide 618, polyamide 916, polyamide 1016 or mixtures thereof, preferably as polyamide 616.

5. Polyamide moulding composition according to any of the preceding claims, **characterised in that** the semi-crystalline polyamide of component (A2) is selected from the group consisting of: polyamide 6, polyamide 66, polyamide 11, polyamide 12, preferably polyamide 12;
and/or **in that** the proportion of partially crystalline polyamide (A2) and/or parts of polyamide (A1) is used as a matrix for a masterbatch for at least one of the components (C), (D) and/or (E).

6. Polyamide moulding composition according to any of the preceding claims, **characterised in that** the proportion of polyamide elastomer (B) is in the range of 8-15 weight percent, preferably in the range of 9-14 weight percent,
and/or **in that** the polyamide elastomer (B) is composed of hard segments based on polyamide 12 and amorphous soft segments based on at least one of the following structural elements: polyether diol, polyester diol, dimer diol, polyether diamine,
wherein preferably the polyether blocks of -diol and/or -diamine are based on, preferably exclusively, at least one C2-C5 (preferably C2-C4) polyoxyalkylene building block, in particular preferably selected from the following group: ethylene oxide, propylene oxide, tetrahydrofuran or a mixture thereof,
and/or **in that** the polyamide elastomer (B) has an amorphous phase with a glass transition temperature of at most 30°C or at most 20°C, preferably at most 0°C, or less than -20°C, the glass transition temperature of the amorphous phase preferably being in the range from (-70°C) - (0°C), in particular preferably in the range from (-60°C) - (-20°C),
and/or that the polyamide elastomer (B) has a tensile modulus of elasticity of at most 1200 MPa or of at most 1000 MPa or of at most 700 MPa, preferably in the range 50-1000 MPa or 80-700 MPa.

7. Polyamide moulding composition according to any of the preceding claims, **characterised in that** at least one of the following conditions applies:
the flame retardant of component (C) is present in a proportion in the range 12-28% by weight, preferably in the range 18-25% by weight,
and/or that the flame retardant of component (C) is selected as a completely halogen-free flame retardant,
and/or that the flame retardant of component (C) is selected from the group of melamine-based flame retardants, and/or of phosphorus-based flame retardants, or both, preferably melamine-based flame retardants being selected from the group of melamine cyanurates, and/or of melamine polyphosphates, and further preferably phosphorus-based flame retardants are selected from the group consisting of phosphinic acid salts, and/or diphosphinic acid salts and/or alkyl phosphates, and/or aryl phosphates, or combinations thereof, preferably selected from the group consisting of cresyldiphenyl phosphate, 2-ethylhexyldiphenyl phosphate, tricresyl phosphate, tris-(2-ethylhexyl)phosphate, triphenyl phosphate or mixtures thereof.

8. Polyamide moulding composition according to any of the preceding claims, **characterised in that** the plasticiser of component (D) is present in a proportion in the range 1.5-5 wt.%, preferably in the range 1.5-3 wt.%,
and/or **in that** the at least one plasticiser (D) is selected as a p-hydroxybenzoic acid ester and/or sulphonamide based plasticiser, preferably of the class of N-substituted sulphonamide plasticisers, in particular preferably as BBSA.

9. Polyamide moulding composition according to one of the preceding claims, **characterised in that** the proportion of additives (E) is in the range of 0.01-3% by weight, preferably in the range of 0.5-1.5% by weight,
and/or that additives (E) are selected from at least one aggregate of the following group: antioxidant; nonconductive pigments; UV absorbers; UV stabilizers; heat and heat stabilizers; hydrolysis stabilizers; dyes; adhesion promoters; compatibilizers; lubricants; release agents; organic or inorganic pigments; IR absorbers, antistatics, antiblocking agents, nucleating agents, crystallization accelerators, crystallization retarders, chain-extending additives, optical brighteners, photochromic additives, and mixtures thereof.

10. Moulded body, in particular plastic pipe, with at least one layer of a polyamide moulding compound according to one of the preceding claims, preferably **characterised in that** the plastic pipe is designed as a single-layer moulded body or multi-layer composite (1) in the form of a hollow body enclosing an interior space (2), and the layer (3) of a polyamide moulding compound according to one of the preceding claims forms the layer which closes off the multi-layer composite (1) inwards and/or outwards.

11. Moulded body, in particular plastic pipe, according to claim 10, **characterised in that** the layer (3) based on polyamide 616 is formed as component (A1),
and/or **in that** the layer (3) has a copper stabilization, preferably based on Cul, preferably as Cul/KI preferably in a ratio of 1:4-1:8, in a proportion in the range of 0.01-0.10% by weight, or in a proportion of 0.03-0.07% by weight, the percentages by weight being based on 100% by weight of the polyamide moulding composition.

12. Plastic pipe according to one of the preceding claims 10 - 11, **characterized in that** the layer of a polyamide moulding composition according to one of the claims 1-9, if it is formed as a single layer, has a thickness in the range of 0.5-2.5 mm, preferably in the range of 0.75-1.5 mm, or, if it is formed as an inner and/or outer layer, has a thickness in the range of 0.3-0.6 mm, preferably in the range of 0.4-0.5 mm, and, if present, a middle layer, preferably of EVOH or a fluoropolymer, disposed between an inner and an outer layer, having a thickness in the range of 0.05-0.2 mm, preferably in the range of 0.075-0.125 mm, whereby preferably the total wall thickness of a multi-layer composite is in the range of 0.5-2.5 mm, preferably in the range of 0.75-1.5 mm.

13. Shaped body, in particular plastic pipe, according to one of the preceding claims 10 -12, **characterised in that** it is produced in an extrusion process, or in the case of a multi-layer plastic pipe, in a co-extrusion process,
and/or **in that** the moulded body is designed in the form of a conduit, which at least in sections is designed as a corrugated pipe, preferably as a conduit for the railway sector or for internal combustion engines, in particular in the automotive sector, in particular for fuel, urea or coolant.

14. Moulded body, in particular plastic pipe, according to one of the preceding claims 10 - 13, **characterised in that** it has an oxygen index (LOI, according to ISO 4589-2 (2006)) of at least 26%, preferably at least 28%, particularly preferably at least 30%.

15. Method for producing a plastic pipe according to one of the preceding claims 10 - 14, **characterised in that** the at least one, or in the case of a multi-layer plastic pipe, the 2 or 3 layers, are formed into a hollow body, in particular preferably into a pipe or a line or a container, in a continuous and/or discontinuous process, preferably in an extrusion blow moulding, a tandem extrusion, a sheathing process or a (co)extrusion process.

## Revendications

1. Matériau de moulage polyamide constitué par les composants suivants :
(A) 50 à 86 pour cent en poids d'une matrice de polyamide, constituée par :
(A1) 60 à 100 pour cent en poids d'au moins un polyamide aliphatique du type :
X.Y,
dans lequel
X est une diamine aliphatique acyclique contenant 4 à 12 atomes de carbone, et
Y est choisi dans le groupe constitué par l'acide brassylique, l'acide tétradécanedioïque, l'acide pentadécanedioïque, l'acide hexadécanedioïque, l'acide heptadécanedioïque, l'acide octadécanedioïque ;
(A2) 0 à 40 pour cent en poids d'un polyamide partiellement cristallin différent de (A1) ;
la somme de (A1) et (A2) étant de 100 pour cent en poids du composant (A) ;
(B) 5 à 25 pour cent en poids d'au moins un élastomère de polyamide à base de polyamide 12 ;
(C) 8 à 30 pour cent en poids d'au moins un agent ignifuge ;
(D) 1 à 10 pour cent en poids d'au moins un plastifiant ;
(E) 0 à 10 pour cent en poids d'additifs différents de (B) à (D) ;
la somme des composants (A) à (E) étant de 100 pour cent en poids du matériau de moulage polyamide.

2. Matériau de moulage polyamide selon la revendication 1, **caractérisé en ce que** la proportion de composant (A) dans le matériau de moulage polyamide se situe dans la plage allant de 55 à 70 pour cent en poids, de préférence dans la plage allant de 60 à 65 pour cent en poids, et/ou **en ce que**, dans le composant (A), la proportion de polyamide (A1) se situe dans la plage allant de 65 à 90 pour cent en poids, de préférence dans la plage allant de 70 à 80 pour cent en poids, et la proportion de polyamide partiellement cristallin (A2) se situe dans la plage allant de 10 à 35 pour cent en poids, de préférence dans la plage allant de 20 à 30 pour cent en poids.

3. Matériau de moulage polyamide selon l'une quelconque des revendications précédentes, **caractérisé en ce que** le polyamide (A1) est choisi en tant que X.Y, X étant une diamine aliphatique non ramifiée linéaire contenant 4 à 12 atomes de carbone, et Y étant choisi dans le groupe constitué par l'acide brassylique, l'acide tétradécanedioïque, l'acide pentadécanedioïque, l'acide hexadécanedioïque, l'acide heptadécanedioïque, l'acide octadécanedioïque,
et/ou **en ce que** le polyamide (A1) présente une viscosité en solution relative, mesurée dans du m-crésol selon ISO 307 (2007) à une température de 20 °C, dans la plage allant de 2,0 à 2,4, de préférence de 2,05 à 2,35,
et/ou **en ce que** ledit au moins un polyamide (A1) présente un point de fusion dans la plage allant de 175 à 240 °C, de préférence de 177 à 220 °C.

4. Matériau de moulage polyamide selon l'une quelconque des revendications précédentes, **caractérisé en ce que** le polyamide (A1) est choisi dans le groupe suivant : le polyamide 514, le polyamide 515, le polyamide 516, le polyamide 517, le polyamide 518, le polyamide 614, le polyamide 615, le polyamide 616, le polyamide 617, le polyamide 618, le polyamide 916, le polyamide 1016 ou leurs mélanges, de préférence en tant que polyamide 616.

5. Matériau de moulage polyamide selon l'une quelconque des revendications précédentes, **caractérisé en ce que** le polyamide partiellement cristallin du composant (A2) est choisi dans le groupe constitué par : le polyamide 6, le polyamide 66, le polyamide 11, le polyamide 12, de préférence le polyamide 12 ;
et/ou **en ce que** la proportion de polyamide partiellement cristallin (A2) et/ou des parties de polyamide (A1) sont utilisées en tant que matrice pour un mélange maître pour au moins un des composants (C), (D) et/ou (E).

6. Matériau de moulage polyamide selon l'une quelconque des revendications précédentes, **caractérisé en ce que** la proportion d'élastomère de polyamide (B) se situe dans la plage allant de 8 à 15 pour cent en poids, de préférence dans la plage allant de 9 à 14 pour cent en poids,
et/ou **en ce que** l'élastomère de polyamide (B) est formé à partir de segments durs à base de polyamide 12 et de segments souples amorphes à base d'au moins un des éléments structuraux suivants : un polyéther-diol, un polyester-diol, un diol dimère, une polyéther-diamine, les séquences polyéther de -diol et/ou -diamine étant de préférence formées à base, de préférence exclusivement, d'au moins un constituant polyoxyalkylène en C2-C5 (de préférence en C2-C4), de manière notamment préférée choisi dans le groupe suivant : l'oxyde d'éthylène, l'oxyde de propylène, le tétrahydrofurane ou un mélange de ceux-ci,
et/ou **en ce que** l'élastomère de polyamide (B) comprend une phase amorphe ayant une température de transition vitreuse d'au plus 30 °C ou d'au plus 20 °C, de préférence d'au plus 0 °C, ou de moins de -20 °C, la température de transition vitreuse de la phase amorphe se situant de préférence dans la plage allant de (-70 °C) à (0 °C), de manière notamment préférée dans la plage allant de (-60 °C) à (-20 °C),
et/ou **en ce que** l'élastomère de polyamide (B) présente un module E en traction d'au plus 1 200 MPa ou d'au plus 1 000 MPa ou d'au plus 700 MPa, de préférence dans la plage allant de 50 à 1 000 MPa ou de 80 à 700 MPa.

7. Matériau de moulage polyamide selon l'une quelconque des revendications précédentes, **caractérisé en ce qu'**au moins une des conditions suivantes est satisfaite :
l'agent ignifuge du composant (C) est présent en une proportion dans la plage allant de 12 à 28 pour cent en poids, de préférence dans la plage allant de 18 à 25 pour cent en poids,
l'agent ignifuge du composant (C) est choisi en tant qu'agent ignifuge entièrement exempt d'halogène,
l'agent ignifuge du composant (C) est choisi dans le groupe constitué par les agents ignifuges à base de mélamine, les agents ignifuges à base de phosphore, ou les deux, les agents ignifuges à base de mélamine étant de préférence choisis dans le groupe constitué par les cyanurates de mélamine, les polyphosphates de mélamine, et, par ailleurs, les agents ignifuges à base de phosphore étant de préférence choisis dans le groupe constitué par les sels de l'acide phosphinique, les sels de l'acide diphosphinique, les phosphates d'alkyle, les phosphates d'aryle, ou leurs combinaisons, de préférence choisis dans le groupe constitué par le phosphate de crésyldiphényle, le phosphate de 2-éthylhexyldiphényle, le phosphate de tricrésyle, le phosphate de tris(2-éthylhexyle), le phosphate de triphényle ou leurs mélanges.

8. Matériau de moulage polyamide selon l'une quelconque des revendications précédentes, **caractérisé en ce que** le plastifiant du composant (D) est présent en une proportion dans la plage allant de 1, 5 à 5 pour cent en poids, de préférence dans la plage allant de 1,5 à 3 pour cent en poids,
et/ou **en ce que** ledit au moins un plastifiant (D) est choisi en tant que plastifiant à base d'ester de l'acide p-hydroxybenzoïque et/ou de sulfonamide, de préférence de la classe des plastifiants sulfonamide N-substitués, de manière notamment préférée en tant que BBSA.

9. Matériau de moulage polyamide selon l'une quelconque des revendications précédentes, **caractérisé en ce que** la proportion d'additifs (E) se situe dans la plage allant de 0,01 à 3 pour cent en poids, de préférence dans la plage allant de 0,5 à 1,5 pour cent en poids,
et/ou **en ce que** les additifs (E) sont choisis parmi au moins un ajout du groupe suivant : les antioxydants ; les pigments non conducteurs ; les absorbeurs UV ; les stabilisateurs UV ; les stabilisateurs thermiques ; les stabilisateurs d'hydrolyse ; les colorants ; les promoteurs d'adhésion ; les agents compatibilisants ; les lubrifiants ; les adjuvants de démoulage ; les pigments organiques ou inorganiques ; les absorbeurs IR ; les antistatiques, les agents anti-bloquants, les agents de nucléation, les accélérateurs de cristallisation, les ralentisseurs de cristallisation, les additifs d'allongement de chaînes, les azurants optiques, les additifs photochromiques, et leurs mélanges.

10. Corps moulé, notamment conduite en matière plastique, comprenant au moins une couche en un matériau de moulage polyamide selon l'une quelconque des revendications précédentes, de préférence **caractérisé en ce que** la conduite en matière plastique est configurée en tant que corps moulé monocouche ou composite multicouche (1) sous la forme d'un corps creux entourant une chambre intérieure (2), et la couche (3) en un matériau de moulage polyamide selon l'une quelconque des revendications précédentes forme la couche terminant le composite multicouche (1) vers l'intérieur et/ou vers l'extérieur.

11. Corps moulé, notamment conduite en matière plastique, selon la revendication 10, **caractérisé en ce que** la couche (3) est configurée à base de polyamide 616 en tant que composant (A1),
et/ou **en ce que** la couche (3) comprend une stabilisation de cuivre, de préférence à base de CuI, de préférence en tant que CuI/KI, de préférence en un rapport de 1:4 à 1:8, en une proportion dans la plage allant de 0,01 à 0,10 pour cent en poids, ou en une proportion de 0,03 à 0,07 pour cent en poids, les pourcentages en poids se rapportant à 100 pour cent en poids du matériau de moulage polyamide.

12. Conduite en matière plastique selon l'une quelconque des revendications 10 à 11 précédentes, **caractérisée en ce que** la couche en un matériau de moulage polyamide selon l'une quelconque des revendications 1 à 9 présente, lorsqu'elle est configurée en tant que couche individuelle, une épaisseur dans la plage allant de 0,5 à 2,5 mm, de manière davantage préférée dans la plage allant de 0,75 à 1,5 mm, ou, lorsqu'elle est configurée en tant que couche intérieure et/ou extérieure, une épaisseur dans la plage allant de 0,3 à 0,6 mm, de préférence dans la plage allant de 0,4 à 0,5 mm,
et, si elle est présente, une couche intermédiaire agencée entre une couche intérieure et une couche extérieure, de préférence en EVOH ou en un polymère fluoré, présente une épaisseur dans la plage allant de 0,05 à 0,2 mm, de préférence dans la plage allant de 0,075 à 0,125 mm,
l'épaisseur de paroi totale d'un composite multicouche se situant de préférence dans la plage allant de 0,5 à 2,5 mm, de manière davantage préférée dans la plage allant de 0,75 à 1,5 mm.

13. Corps moulé, notamment conduite en matière plastique, selon l'une quelconque des revendications 10 à 12 précédentes, **caractérisé en ce qu'**il est fabriqué dans un procédé d'extrusion ou, dans le cas d'une conduite en matière plastique multicouche, dans un procédé de coextrusion,
et/ou **en ce que** le corps moulé est configuré sous la forme d'une conduite, qui est configurée au moins en sections en tant que tube ondulé, de préférence en tant que conduite pour le domaine ferroviaire ou pour moteurs à combustion, notamment dans le domaine automobile, notamment pour carburant, urée ou agent réfrigérant.

14. Corps moulé, notamment conduite en matière plastique, selon l'une quelconque des revendications 10 à 13 précédentes, **caractérisé en ce qu'**il présente un indice d'oxygène (LOI, selon ISO 4589-2 (2006)) d'au moins 26 %, de préférence d'au moins 28 %, de manière particulièrement préférée d'au moins 30 %.

15. Procédé de fabrication d'une conduite en matière plastique selon l'une quelconque des revendications 10 à 14 précédentes, **caractérisé en ce que** ladite au moins une, ou dans le cas d'une conduite en matière plastique multicouche, les 2 ou 3 couches, sont façonnées dans un procédé continu et/ou discontinu, de préférence dans une extrusion-soufflage, une extrusion tandem, un procédé de gainage ou un procédé de (co)extrusion, en un corps creux, de manière notamment préférée en un tube ou une conduite ou un contenant.
